# EUROPEAN PATENT APPLICATION

(11) **EP 4 197 838 A1**
(43) Date of publication of application: **21.06.2023**
(21) Application number: 21306848.9
(22) Date of filing: 20.12.2021
(51) Int. Cl.: B60K 35/00, B60W 30/12, B60W 50/14, B60Q 9/00

(54) **METHOD AND SYSTEM FOR ASSISTING A DRIVER OF A ROAD VEHICLE**

(71) Applicant: TOYOTA JIDOSHA KABUSHIKI KAISHA, Toyota-shi, Aichi-ken, 471-8571 (JP)
(72) Inventor: ONO, Fumiaki, 1140 BRUSSELS (BE); CACCIA DOMINIONI, Giancarlo, 1140 BRUSSELS (BE); GENTNER, Alexandre, 1140 BRUSSELS (BE); CAROLI, Antonio, 1140 BRUSSELS (BE)
(74) Representative: Cabinet Beau de Loménie

(57) **Abstract**

The present invention concerns a method and a system (10) for assisting a driver of a road vehicle (1). A data processing unit (14) receives data representing at least a relative position of the road vehicle (1), outputs, through a display device (11) and/or an interior lighting device (12r,12l,12c), a first visual alert when the data processing unit (14) determines that the data fulfil a first condition, and outputs, through a sound-emitting device (13), an audible alert when the data processing unit (14) determines that the data fulfil a second condition after fulfilling the first condition.

## Description

### TECHNICAL FIELD

The disclosure relates to a method and a system for assisting a driver of a road vehicle.

### BACKGROUND

Driver assistance systems and methods using data processing units and output devices to perform functions such as Lane Departure Alert (LDA) and Blind Spot Warning (BSW) are becoming increasingly frequent in road vehicles. European patent application publication EP 1 918 896 A1 discloses such driver assistance and methods performing both LDA and BSW functions. Through these functions, the situational awareness of the driver may be substantially increased and the risk of an accident accordingly reduced.

Excessively frequent warnings may however irritate the driver and become counterproductive. Audible warnings, in particular, may be perceived as particularly intrusive, ultimately leading the driver to disregard or deactivate the driver assistance system.

### SUMMARY

A first object of the disclosure is that of providing gradually escalating alerts to ensure the driver's situational awareness without excessive sensory input or stress.

According to a first aspect of the disclosure, a method for assisting a driver of a road vehicle may comprise receiving, at a data processing unit, data representing at least a relative position of the road vehicle; outputting, through a display device and/or an interior lighting device, a first visual alert when the data processing unit determines that the data fulfil a first condition; and outputting, through a sound-emitting device, an audible alert when the data processing unit determines that the data fulfil a second condition after fulfilling the first condition. Said relative position may be for example a relative lateral position of the road vehicle with respect to a lane boundary or a lane centreline and/or a relative position of the road vehicle with respect to an obstacle, and in particular an obstacle located in a blind spot for the driver.

By first outputting a visual alert when a first condition is fulfilled, and only outputting an audible alert when a second condition is fulfilled in addition to the first condition, an early, less intrusive warning may be provided to the driver, thus increasing his situational awareness without an overload of sensory inputs.

In particular, the visual alert may include a change of light intensity and/or color from a lateral interior lighting device located at one side of the road vehicle with respect to a driver seat, optionally together with a central interior lighting device. This lateral interior lighting device may be incorporated for example in a cabin ceiling, pillar and/or door. The driver may thus receive the first visual alert through his peripheral vision without distraction from other tasks. Said one side of the vehicle may be a side of the vehicle closest to a lane boundary and/or an obstacle, thus providing directional information with respect to the direction of a potential lane departure or the proximity of an obstacle. Alternatively or complementarily, the visual alert may include a display, on the display device, of said relative position of the road vehicle.

At least one of the first and second conditions may involve a distance threshold. In particular, the distance threshold may be a threshold in a lateral distance with respect to a lane boundary or centreline. In that case, the distance threshold may be a relative lateral distance threshold, based on a lane width. The first visual alert and/or the audible alert could thus be lane departure alerts, informing the driver that a lateral distance to a lane boundary has fallen below a threshold, or that a lateral distance to a lane centreline has exceeded a threshold, in absolute terms or in relative terms, for example with respect to a lane width. Alternatively or complementarily to this, however, the distance threshold may be a threshold in a distance with respect to an obstacle located in a blind spot. The first visual alert and/or the audible alert could thus be blind spot warnings, informing the driver that a distance to an obstacle located in a blind spot has fallen beneath a threshold.

At least one of the first and second conditions may involve at least one of a lateral speed and lateral acceleration thresholds, wherein said lateral speed and acceleration could be absolute or relative to e.g. a lane boundary, a lane centreline or a potential obstacle. The first visual alert and/or the audible alert could thus be triggered by a sudden swerve of the road vehicle, of a lane on which it travels and/or of a potential obstacle.

At least one of the first and second conditions may involve a time threshold. For example, the first condition may involve a distance threshold and a first time threshold and the second condition may involve the same distance threshold and a longer second time threshold so that the first visual alert is output when a lateral distance to a lane centreline has exceeded a distance threshold during a period exceeding a first time threshold, and the audible alert is output when the lateral distance to the lane centreline has remained above the threshold during a period exceeding a longer second time threshold.

At least one of the first and second conditions may involve a driver alertness level, such as may be estimated, for instance, from eye-tracking, heart rate, or other physiological data. For example, the first visual alert may be output in response to the first condition, and the audible alert may then be output when the first condition is still fulfilled but the driver alertness level remains low despite the first visual alert.

According to a second aspect of the disclosure, a system for assisting the driver of a road vehicle may comprise a display device and/or an interior lighting device, a sound-emitting device, and a data processing unit configured to receive data representing at least a relative position of the road vehicle, output a first visual alert through the display device and/or interior lighting device when the data fulfil a first condition, and output an audible alert through the sound-emitting device when the data fulfil a second condition after fulfilling the first condition. The system may further comprise at least one imaging and/or proximity sensor, e.g. at least one camera, connected to the data processing unit for capturing at least part of said data and transmitting them to the data processing unit. The data processing unit may be configured to recognize for example lane boundaries or obstacles from the data captured by the at least one sensor and transmitted to the data processing unit, using for instance an image recognition algorithm.

The above summary of some example embodiments is not intended to describe each disclosed embodiment or every implementation of the invention. In particular, selected features of any illustrative embodiment within this specification may be incorporated into an additional embodiment unless clearly stated to the contrary.

### BRIEF DESCRIPTION OF THE DRAWINGS

The invention may be more completely understood in consideration of the following detailed description of various embodiments in connection with the accompanying drawings, in which :
- FIG. 1 is a schematic drawing of a road vehicle comprising a driver assistance system according to a first embodiment;
- FIG. 2 illustrates the cabin of the road vehicle of FIG. 1;
- FIG. 3 is a flowchart of a driver assistance method according to the first embodiment;
- FIG. 4 illustrates a display of a driver assistance system according to a first modification of the first embodiment;
- FIG. 5 is a timeline of a driver assistance method according to a third modification of the first embodiment;
- FIG. 6 is a schematic drawing of a road vehicle comprising a driver assistance system according to a second embodiment;
- FIG. 7 is a flowchart of a driver assistance method according to the second embodiment; and
- FIG. 8 illustrates a display of a driver assistance system according to a second modification of the first embodiment.

While the invention is amenable to various modifications and alternative forms, specifics thereof have been shown by way of example in the drawings and will be described in detail. It should be understood, however, that the intention is not to limit aspects of the invention to the particular embodiments described. On the contrary, the intention is to cover all modifications, equivalents, and alternatives falling within the scope of the invention.

### DETAILED DESCRIPTION

For the following defined terms, these definitions shall be applied, unless a different definition is given in the claims or elsewhere in this specification.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.

### First embodiment

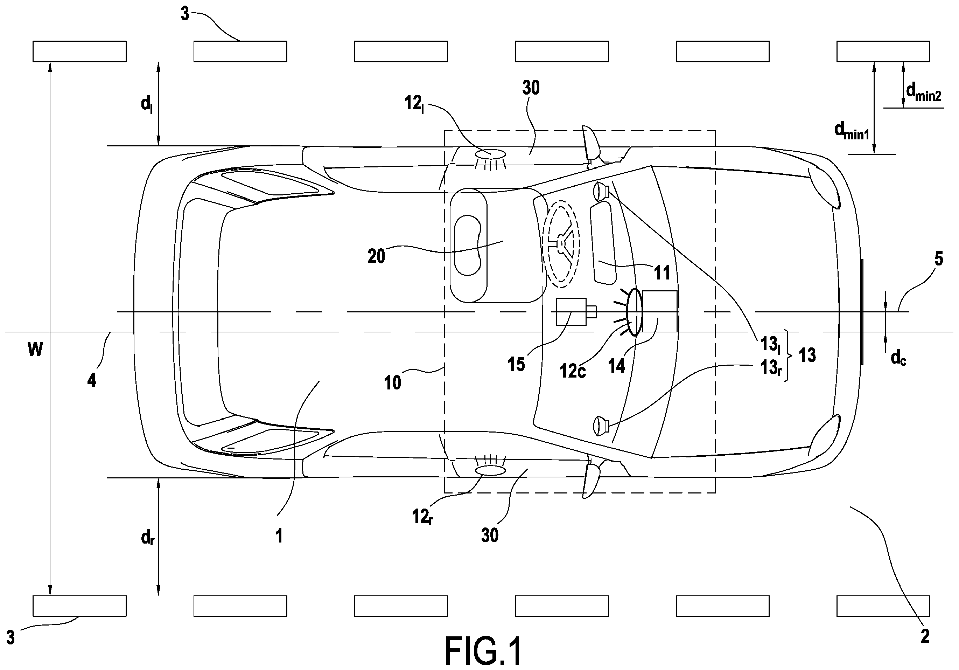

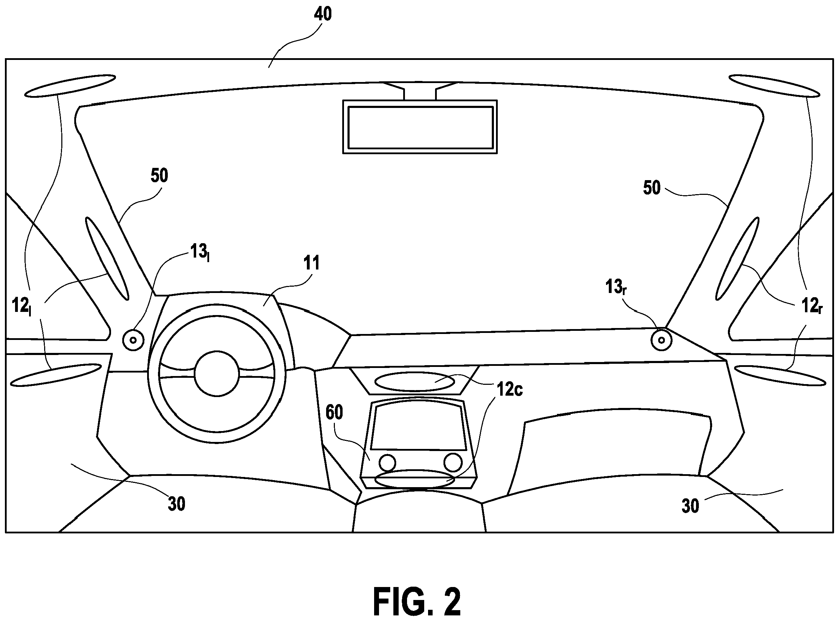

A road vehicle 1 incorporating a driver assistance system 10 according to a first embodiment is illustrated in Figs. 1 and 2. This road vehicle 1 may comprise a cabin, shown in Fig. 2, with a driver's seat 20, and doors 30 at either side of the driver's seat 20. The system 10 may comprise interior lighting devices 12r,12l,12c, a sound-emitting device 13, a data processing unit 14 connected to the interior lighting devices 12r, 121, 12c and sound-emitting device 13, and one or more imaging sensors 15, connected to the data processing unit 14.

The lateral interior lighting devices 12r, 121 may be respectively located to the right and left of the driver's seat 20, and may in particular be incorporated in the cabin ceiling 40, in the pillars 50 and/or in the doors 30. The central interior lighting device 12c may be located in the centre of the cabin and may in particular be incorporated in a centre console 60. These interior lighting devices 12r, 121, 12c may comprise light-emitting diodes, possibly arranged in strips and/or arrays. The sound-emitting device 13 may include loudspeakers 13r,131 respectively located to the right and left of the driver's seat 20. In this first embodiment, the imaging sensors 15 may in particular include a camera configured to capture images of the road 2 on which the vehicle 1 drives.

The data processing unit 14 may be configured to receive data from the imaging sensors 15, output a first visual alert through the interior lighting devices 12r, 121 when the data fulfil a first condition, and output an audible alert through the sound-emitting device 13 when the data fulfil a second condition after fulfilling the first condition.

In particular, in this first embodiment, the data processing unit 14 may be configured to recognize, from images captured by the imaging sensors 15 lane boundaries 3 on the road 2, and determine lateral distances from those images. These lateral distances may be lateral distances dᵣ, dₗ with respect to the closest lane boundaries 3, measured for example from the corresponding sides of the vehicle 1, or from a vehicle centreline 5.

In this first embodiment, the first condition may include whether any one of the lateral distances dᵣ, dₗ to the lane boundaries 3 falls below a first distance threshold dₘᵢₙ₁. This distance threshold could be set in absolute or in relative terms, for instance as a fraction of the lane width W between the lane boundaries 3.

Further, in this first embodiment, the second condition may include whether any one of the lateral distances dᵣ, dₗ to the lane boundaries 3 falls below a second distance threshold dₘᵢₙ₂, substantially lower than the first threshold dₘᵢₙ₁.

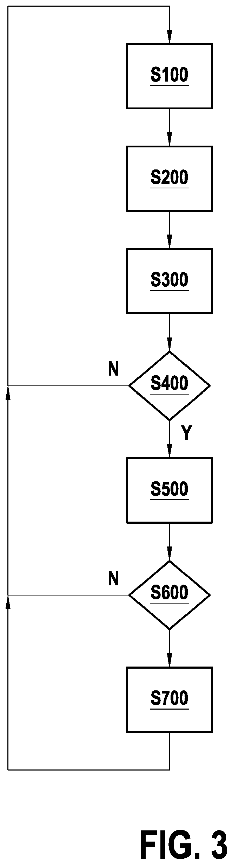

Consequently, the driver assistance system 10 may perform an LDA function according to a method which, as illustrated in Fig. 3, may comprise a step S100 wherein the sensors 15 may capture images of the road 2, a step S200 wherein the data processing unit 14 may recognize the lane boundaries 3 from images captured by the sensors 15 in step S100 and transmitted to the data processing unit 14, a step S300 wherein the data processing unit 14 may determine the lateral distances dᵣ, dₗ with respect to the closest lane boundaries 3, and a step S400 wherein the data processing unit 14 may determine whether the first condition is fulfilled, namely, in this case, whether any one of the lateral distances dᵣ, dₗ to the lane boundaries 3 falls below the first distance threshold dₘᵢₙ₁. If the data processing unit 14 determines, in said step S400, that the first condition is not fulfilled, that is, in this case, that none of the lateral distances dᵣ, dₗ to the lane boundaries 3 falls below the first threshold dₘᵢₙ₁, the process may be restarted at step S100. If the data processing unit 14 determines, however, that one of the lateral distances dᵣ, dₗ to the lane boundaries 3 falls below the first threshold dₘᵢₙ₁, the data processing unit 14 may then, in a subsequent step S500, output the first visual alert through the lateral interior lighting device 12r, 121 on the side closest to a lane boundary 3. This first visual alert may take the form of a change of light intensity and/or color from that interior lighting device 12r, 121 on the side closest to a lane boundary 3, eventually together with the central interior lighting device 12c, for instance by flashing once or repeatedly. The driver may thus be gently alerted to the lane departure and advised to focus on the road through the peripheral vision.

In a subsequent step S600, the data processing unit 14 may then determine whether the second condition is fulfilled, namely, in this case, whether any one of the lateral distances dᵣ, dₗ to the lane boundaries 3 falls below the second distance threshold dₘᵢₙ₂. If the data processing unit 14 determines, in said step S600, that the second condition is not fulfilled, that is, in this case, that none of the lateral distances dᵣ, dₗ to the lane boundaries 3 falls below the second threshold dₘᵢₙ₂, the process may be restarted at step S100. If the data processing unit 14 determines, however, that one of the lateral distances dᵣ, dₗ to the lane boundaries 3 falls below the second threshold dₘᵢₙ₂, the data processing unit 14 may then, in a subsequent step S700, output an audible alert through the sound-emitting device 13, alone or together with a second visual alert. To further increase the driver's situational awareness, when the sound-emitting device 13 includes loudspeakers 13r,13l respectively located to the right and left of the driver's seat 20, the audible alert may be louder on the side closest to a lane boundary 3. The driver may thus be more insistently alerted to the aggravated risk of a lane departure.

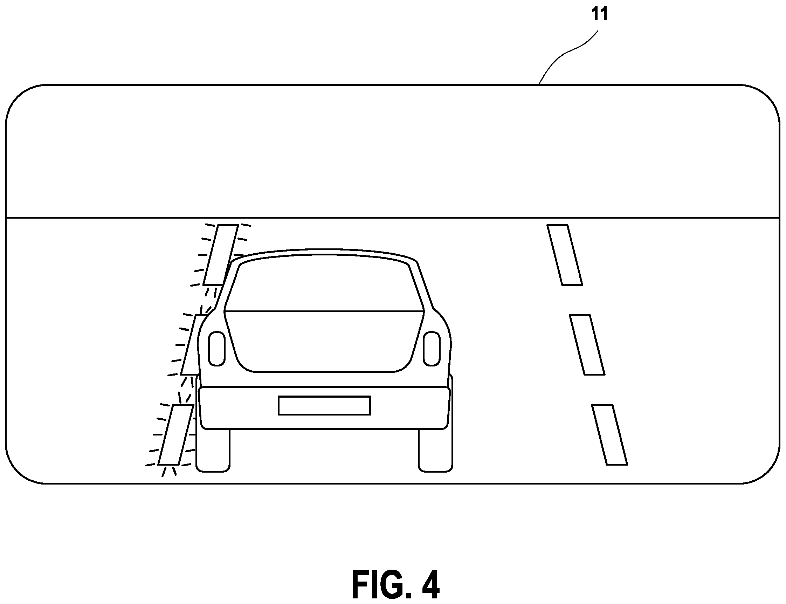

In a first modification of the first embodiment, the driver assistance system 10 may include, alternatively or complementarily to the interior lighting devices 12r, 121, 12c, a display device 11 connected to the data processing unit 14 for outputting the first and/or second visual alerts. The display device 11 may for example be a liquid-crystal display, a LED screen, or an OLED screen, and may be located for example directly in front of the driver's seat 20. The display device 11 may for instance schematically illustrate the vehicle 1 with respect to the lane boundaries 3, as in Fig. 4.

In a second modification of the first embodiment, the first and/or second conditions may relate to a lateral distance d_{c} to a lane centreline 4, equidistant from the two closest lane boundaries 3. In this case, the data processing unit 14 may be configured to determine, in step S300, said lateral distance d_{c} with respect to a lane centreline 4 equidistant from the two closest lane boundaries 3, and the first and second conditions applied in steps S400 and S600 may include whether the lateral distance d_{c} to the lane centreline 4 exceeds respective first and second distance thresholds dₘₐₓ₁, dₘₐₓ₂, wherein the second distance threshold dₘₐₓ₂ may be substantially higher than the first distance threshold dₘₐₓ₁.

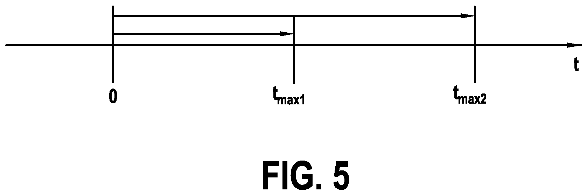

In a third modification of the first embodiment, the first and/or second conditions may relate to time thresholds. In this case, the first and second conditions applied in steps S400 and S600 may include whether any one of the lateral distances dᵣ, dₗ to the lane boundaries 3 has been below a distance threshold dₘᵢₙ for periods exceeding, respectively, a first time threshold tₘₐₓ₁, and a significantly longer second time threshold tₘₐₓ₂, as illustrated in Fig. 5.

In a fourth modification of the first embodiment, the first and/or second conditions may be related to a lateral speed and/or acceleration of the road vehicle 1 with respect to the lane boundaries 3 and/or the lane centreline 4. For example, the first condition may include whether a lateral speed and/or acceleration of the road vehicle 1 towards one of the lane boundaries 3 and/or away from the lane centreline 4 exceeds a speed and/or acceleration threshold, and the first visual alert may take the form of a change of light intensity and/or color from the interior lighting device 12r, 121 on the side towards which the road vehicle 1 is swerving, eventually together with the central interior lighting device 12c, and the second condition may include whether the lateral distance dᵣ, dₗ to the lane boundary 3 on the same side falls below a distance threshold dₘᵢₙ and/or whether the lateral distance d_{c} with respect to the lane centreline 4 has exceeded a distance threshold dₘₐₓ.

In a fifth modification of the first embodiment, the driver assistance system 10 may comprise additional sensors such as, for example, steering input sensors, eye tracking sensors and/or physiological sensors, the data processing unit 14 may be connected to these additional sensors and configured to determine a driver alertness level based on data transmitted to the data processing unit 14 by those additional sensors, and the second condition may be related to this driver alertness level. For instance, the second condition may be whether the driver alertness level is still below a threshold, even after the first visual alert, so that the audible alert will be triggered if the driver is insufficiently alert after the first visual alert.

These various modifications may be combined in other ways, so that, for example, the time thresholds of the third modification may be applied to periods during which the lateral distance d_{c} to a lane centreline 4 exceeds a distance threshold dₘₐₓ, as in the second modification.

### Second embodiment

The first embodiment provides a driver assistance system 10 and method with an LDA function. However, it may be possible to combine the LDA function with other functions, such as, for example, a BSW function.

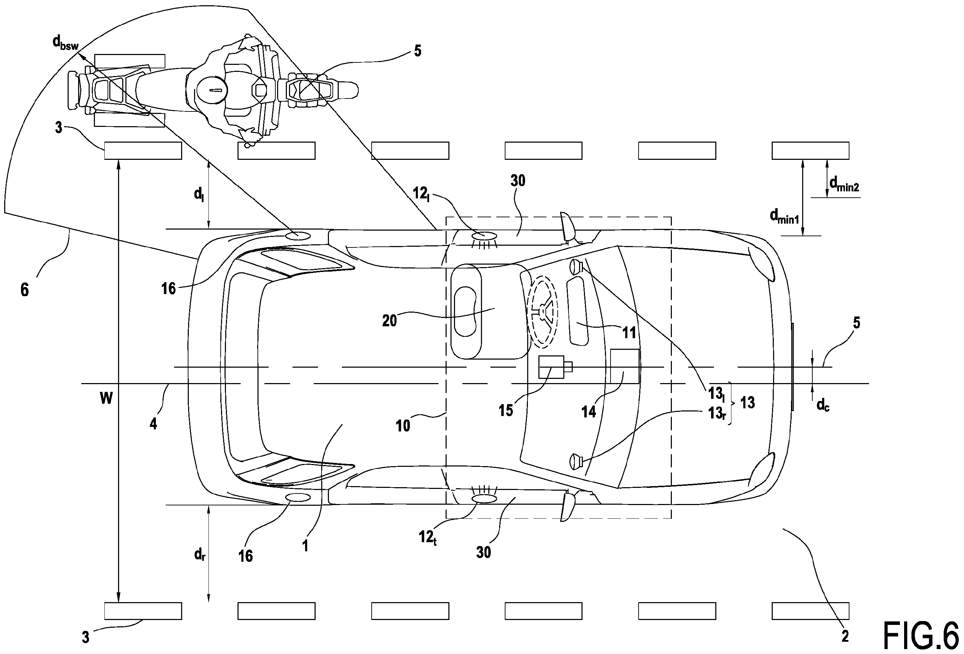

A road vehicle 1 incorporating a driver assistance system 10 according to a second embodiment is illustrated in Fig. 6. This road vehicle 1 may comprise a cabin like that shown in Fig. 2. The system 10 may comprise, apart from the features of the first embodiment, one or more proximity sensors 16, connected to the data processing unit 14, and configured to detect obstacles within a distance threshold d_{bsw} in blind spots 6 around the road vehicle 1. The remaining elements of the road vehicle 1 and driver assistance system according to this second embodiment are analogous to those of the first embodiment.

The data processing unit 14 may be configured to receive data from the proximity sensors 16, as well as from the imaging sensors 15, output a first visual alert through the interior lighting devices 12r, 121 when the data fulfil a first condition, and output an audible alert through the sound-emitting device 13 when the data fulfil a second condition after fulfilling the first condition.

In particular, in this first embodiment, the data processing unit 14 may be configured to not only recognize, from images captured by the imaging sensors 15 lane boundaries 3 on the road 2, and determine lateral distances from those images, but also to determine, from data captured by the proximity sensors 16, the presence or absence of a potential obstacle 5, within the distance threshold d_{bsw}, in a blind spot 6.

In this second embodiment, the first condition may include whether there is a potential obstacle 5 within the distance threshold d_{bsw}, in a blind spot 6.

Further, in this second embodiment, the second condition may include whether any one of the lateral distances dᵣ, dₗ to the lane boundary 3 closest to the potential obstacle 5 falls below another distance threshold dₘᵢₙ.

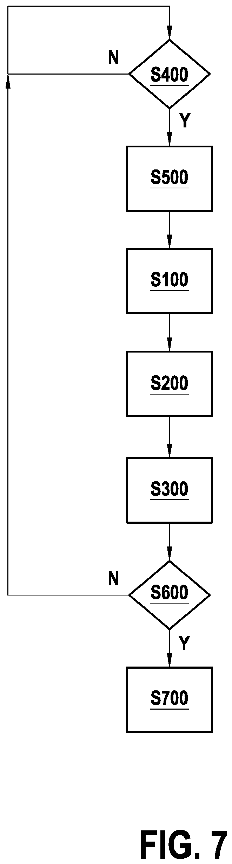

Consequently, the driver assistance system 10 may perform combined BSW and LDA functions according to a method as illustrated in Fig. 7, wherein the data processing unit 14 in step S400 may determine whether the first condition is fulfilled, namely, in this case, from data captured and transmitted by the proximity sensors 16, whether a potential obstacle 5 is present within the distance threshold d_{bsw}, in a blind spot 6. If the data processing unit 14 determines, in said step S400, that the first condition is not fulfilled, that is, in this case, that there is not any potential obstacle 5 within the distance threshold d_{bsw} in a blind spot 6, the process may be restarted at step S400. If the data processing unit 14 determines, however, that there is not any potential obstacle 5 within the distance threshold d_{bsw} in a blind spot 6, the data processing unit 14 may then, in step S500, output the first visual alert through the lateral interior lighting device 12r, 121 on the side closest to the potential obstacle 5, eventually together with the central interior lighting device 12c. This first visual alert may take the form of a change of light intensity and/or color from that lateral interior lighting device 12r, 121 on the side closest to the potential obstacle 5, eventually together with the central interior lighting device 12c, for instance by flashing once or repeatedly. The driver may thus be gently alerted to the obstacle through the peripheral vision.

In steps S100, S200 and S300, the sensors 15 may capture images of the road 2, the data processing unit 14 may recognize the lane boundaries 3 from images captured by the sensors 15 and transmitted to the data processing unit 14, and the data processing unit 14 may determine the lateral distances dᵣ, dₗ with respect to the closest lane boundaries 3, as in the first embodiment. In subsequent step S600, the data processing unit 14 may then determine whether the second condition is fulfilled, namely, in this case, whether the lateral distance dᵣ, dₗ to the lane boundary 3 closest to the potential obstacle 5 falls below a distance threshold dₘᵢₙ. If the data processing unit 14 determines, in said step S600, that the second condition is not fulfilled, that is, in this case, that the lateral distance dᵣ, dₗ to the lane boundary 3 closest to the potential obstacle 5 does not fall below the distance threshold dₘᵢₙ₂, the process may be restarted at step S400. If the data processing unit 14 determines, however, that the lateral distance dᵣ, dₗ to the lane boundary 3 closest to the potential obstacle 5 falls below the distance threshold dₘᵢₙ, the data processing unit 14 may then, in step S700, output an audible alert through the sound-emitting device 13, alone or together with a second visual alert. To further increase the driver's situational awareness, when the sound-emitting device 13 includes loudspeakers 13r,13l respectively located to the right and left of the driver's seat 20, the audible alert may be louder on the side closest to the potential obstacle. The driver may thus be more insistently alerted to the aggravated risk, because of a lane departure, of a collision against an obstacle within a blind spot.

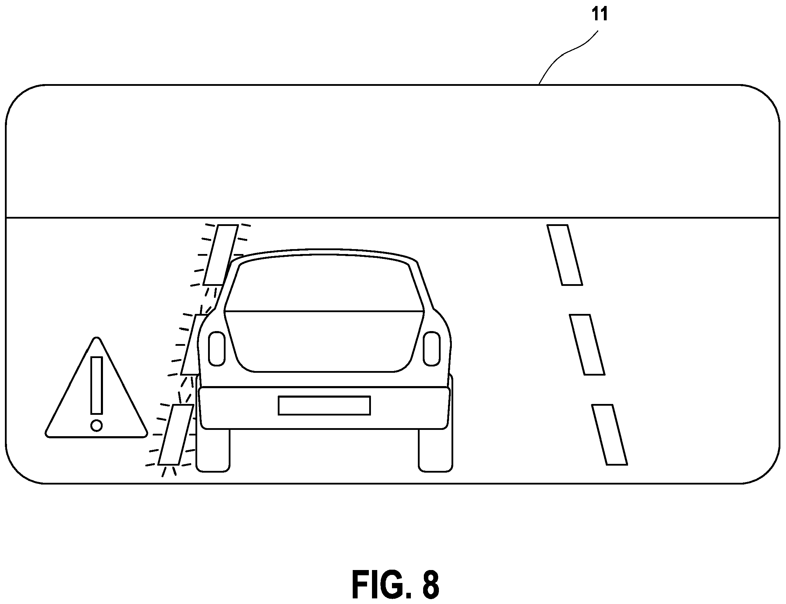

In a first modification of the second embodiment, the driver assistance system 10 may include, alternatively or complementarily to the interior lighting devices 12r, 121, 12c, a display device 11 connected to the data processing unit 14 for outputting the first and/or second visual alerts. As in the first modification of the first embodiment, the display device 11 may for example be a liquid-crystal display, a LED screen, or an OLED screen, and may be located for example directly in front of the driver's seat 20. The display device 11 may for instance schematically illustrate the vehicle 1 with respect to the lane boundaries 3 and obstacle 5, as in Fig. 8.

In a second modification of the second embodiment, the second condition may relate to a lateral distance d_{c} to a lane centreline 4, equidistant from the two closest lane boundaries 3. In this case, the data processing unit 14 may be configured to determine, in step S300, said lateral distance d_{c} with respect to a lane centreline 4 equidistant from the two closest lane boundaries 3, and the second condition applied in steps S600 may include whether the lateral distance d_{c} with respect to the lane centreline 4, in the direction of the obstacle 5, exceeds a distance threshold dₘₐₓ.

In a third modification of the second embodiment, the first and/or second conditions may relate to time thresholds. In this case, the first and second conditions applied in steps S400 and S600 may include whether the potential obstacle 5 in blind spot 6 has been within the distance threshold d_{bsw} for periods exceeding, respectively, a first time threshold tₘₐₓ₁, and a significantly longer second time threshold tₘₐₓ₂, as illustrated in Fig. 5.

In a fourth modification of the second embodiment, the second condition may be related to a lateral speed and/or acceleration of the road vehicle 1 with respect to the lane boundaries 3 and/or the lane centreline 4. For example, the second condition may include whether a lateral speed and/or acceleration of the road vehicle 1 towards the lane boundary 3 closest to obstacle 5 and/or away from the lane centreline 4 in the direction of obstacle 5 exceeds a speed and/or acceleration threshold.

In a fifth modification of the second embodiment, the driver assistance system 10 may comprise additional sensors such as, for example, steering input sensors, eye tracking sensors and/or physiological sensors, the data processing unit 14 may be connected to these additional sensors and configured to determine a driver alertness level based on data transmitted to the data processing unit 14 by those additional sensors, and the second condition may be related to this driver alertness level. For instance, the second condition may be whether the driver alertness level is still below a threshold, even after the first visual alert, so that the audible alert will be triggered if the driver is insufficiently alert after the first visual alert.

These various modifications may be combined in other ways, so that, for example, a time threshold as in the third modification may be applied to a period during which the lateral distance d_{c} to a lane centreline 4 exceeds a distance threshold dₘₐₓ, as in the second modification.

Those skilled in the art will recognize that the present invention may be manifested in a variety of forms other than the specific embodiments and modifications described and contemplated herein, in particular by combining features from these individual embodiments and their various modifications. Accordingly, departure in form and detail may be made without departing from the scope of the present invention as described in the appended claims.

## Claims

1. A method for assisting a driver of a road vehicle (1), comprising:
receiving, at a data processing unit (14), data representing at least a relative position of the road vehicle (1);
outputting, through a display device (11) and/or an interior lighting device (12r,12l,12c), a first visual alert when the data processing unit (14) determines that the data fulfil a first condition; and
outputting, through a sound-emitting device (13), an audible alert when the data processing unit (14) determines that the data fulfil a second condition after fulfilling the first condition.

2. The method of claim 1, wherein the visual alert includes a change of light intensity and/or color from a lateral interior lighting device (12r,12l) located at one side of the road vehicle (1) with respect to a driver seat (20), optionally together with a central interior lighting device (12c).

3. The method of claim 2, wherein the lateral interior lighting device (12r,12l) is incorporated in a cabin ceiling (40), pillar (50) and/or door (30).

4. The method of any one of claims 2 or 3, wherein said one side of the road vehicle (1) is a side closest to a lane boundary (2) and/or an obstacle (5).

5. The method of any one of the previous claims, wherein the visual alert includes a display of said relative position of the road vehicle (1) on the display device (11).

6. The method of any one of the previous claims, wherein at least one of the first and second conditions involves a distance threshold (dₘᵢₙ₁, dₘᵢₙ₂, dₘₐₓ₁, dₘₐₓ₂, dₘᵢₙ, dₘₐₓ, d_{bsw}).

7. The method of claim 6, wherein the distance threshold is a threshold (dₘᵢₙ₁, dₘᵢₙ₂, dₘₐₓ₁, dₘₐₓ₂, dₘᵢₙ, dₘₐₓ) in a lateral distance with respect to a lane boundary or centreline.

8. The method of claim 7, wherein the distance threshold (dₘᵢₙ₁, dₘᵢₙ₂, dₘₐₓ₁, dₘₐₓ₂, dₘᵢₙ, dₘₐₓ) is a relative lateral distance threshold, based on a lane width.

9. The method of claim 6, wherein the distance threshold is a threshold (d_{bsw}) in a distance with respect to an obstacle (5) located in a blind spot.

10. The method of any one of the previous claims, wherein at least one of the first and second conditions involves at least one of a lateral speed and lateral acceleration thresholds.

11. The method of any one of the previous claims, wherein at least one of the first and second conditions involves a time threshold (tₘₐₓ₁, tₘₐₓ₂).

12. The method of any one of the previous claims, wherein at least one of the first and second conditions involves a driver alertness level.

13. A system (10) for assisting the driver of a road vehicle (1), comprising:
a display device (11) and/or an interior lighting device (12r,121,12c);
a sound-emitting device (13);
a data processing unit (14) configured to receive data representing at least a relative position of the road vehicle (1), output a first visual alert through the display device (11) and/or interior lighting device (12r,12l,12c) when the data fulfil a first condition, and output an audible alert through the sound-emitting device (13) when the data fulfil a second condition after fulfilling the first condition.

14. The system of claim 13, also comprising at least one sensor (15,16) connected to the data processing unit (14) for capturing at least part of said data and transmitting them to the data processing unit (14).

15. The system of claim 1, wherein the at least one sensor comprises at least one imaging sensor (15) and/or proximity sensor (16).
